# EUROPÄISCHE PATENTSCHRIFT

(11) **EP 4 385 303 B1**
(45) Veröffentlichungstag und Bekanntmachung des Hinweises auf die Patenterteilung: **28.01.2026**
(21) Anmeldenummer: 23210561.9
(22) Anmeldetag: 17.11.2023
(51) Int. Cl.: A01D 34/00, A01D 33/00

(54) **ERNTEFAHRZEUG UND ENTSPRECHENDE VERWENDUNG**
HARVESTING VEHICLE AND CORRESPONDING USE
VÉHICULE DE RÉCOLTE ET UTILISATION CORRESPONDANTE

(30) Priorität: 14.12.2022 DE 102022133246
(43) Veröffentlichungstag der Anmeldung: 19.06.2024
(73) Patentinhaber: Exel Industries, 51200 Epernay (FR)
(72) Erfinder: GALLMEIER, Michael, 84061 ERGOLDSBACH (DE); OSENBERG, Gerhard, 65193 Wiesbaden (DE)
(74) Vertreter: Lavoix

(56) Entgegenhaltungen:
- EP-A1- 3 785 516
- WO-A1-2022/223729
- BE-A6- 1 013 194
- DE-B3- 102009 010 438

## Beschreibung

Die Erfindung bezieht sich auf ein Erntefahrzeug gemäß dem Oberbegriff des Patentanspruches 1 sowie eine entsprechende Verwendung.

Aus der DE102009010438 ist ein Verfahren bekannt, das das Zerkleinern von Hackfrüchten einer Parzelle in im Wesentlichen gleich große Stücke umfasst. Die Stücke werden anschließend durch eine Transporteinrichtung befördert und mit Licht des nahen Infrarotbereichs bestrahlt, die reflektierte Strahlung aufgenommen und in ein spektrales Signal umgewandelt. Anschließend wird das spektrale Signal zur Bestimmung der Inhaltsstoffe prozessiert. Eine entsprechende Vorrichtung ist ebenfalls offenbart.

Das Verfahren ist dazu ausgebildet die Früchte einer Parzelle zu analysieren und soll eine Repräsentativität der Probe aus Hackfrüchten gewährleisten, die der biologischen Variabilität der Feldfrucht und der heterogenen Inhaltsstoffverteilung im Pflanzenkörper gerecht wird.

Die bekannte Vorrichtung und das bekannte Verfahren sind jedoch aufwendig und im Wesentlichen auf Parzellen zu Züchtungszwecken (siehe DE'438 [0003]) beschränkt.

Weiterhin sind Erntefahrzeuge bekannt, die zum Ernten von Wurzelfrüchten, beispielsweise Zuckerrüben, verwendet werden. Diese Erntefahrzeuge haben im Vergleich zu Vorrichtungen zu Züchtungszwecken einen sehr hohen Durchsatz.

WO2022223729A1 beschreibt ein Rübenerntesystem. BE1013194A6 offenbart eine Rübenerntemaschine. EP3785516A1 offenbart eine Vorrichtung zur Bestimmung eines Datums bei der Rübenernte.

Eine Aufgabe der Erfindung ist es, eine Vorrichtung aufzuzeigen, die es erlaubt den Ernteprozess von Wurzelfrüchten mit einfachen und kostengünstigen Mitteln zu verbessern. Insbesondere soll dem/der Landwirt/in eine zeitnahe Information über die Qualität der geernteten Wurzelfrüchte zur Verfügung gestellt werden können.

Zur Lösung dieser Aufgabe ist ein Erntefahrzeug entsprechend des Patentanspruchs 1 ausgebildet. Eine entsprechende erfindungsgemäße Verwendung ist in Anspruch 10 angegeben.

Der Vorteil der erfindungsgemäßen Vorrichtung und der Verwendung besteht u.a. darin, dass eine zeitnahe Erfassung der Qualität des Erntegutes, insbesondere während des Erntens erhalten wird.

Soweit sie unter den in Anspruch 1 definierten Gegenstand fallen, können die übrigen einzelnen offenbarten Merkmale der Erfindung und der Ausführungsbeispiele jeweils in der offenbarten Kombination oder in jeder anderen technisch möglichen Unterkombination einzeln oder gemeinsam verwendet werden und sind somit als offenbart anzusehen.

Weiterbildungen der Erfindung sind Gegenstand der Unteransprüche.

Wenn im Folgenden jeweils ein funktionales Merkmal offenbart ist, so ist damit auch das entsprechende Verfahrensmerkmal explizit mit als offenbart anzusehen.

Die Erfindung wird im Folgenden anhand der Figuren an einem Ausführungsbeispiel näher erläutert. Es zeigen:
Fig. 1: in Seitendarstellung ein erfindungsgemäßes Ernte- oder Rodefahrzeug zum Roden bzw. Ernten von Wurzelfrüchten, insbesondere Zuckerrüben;

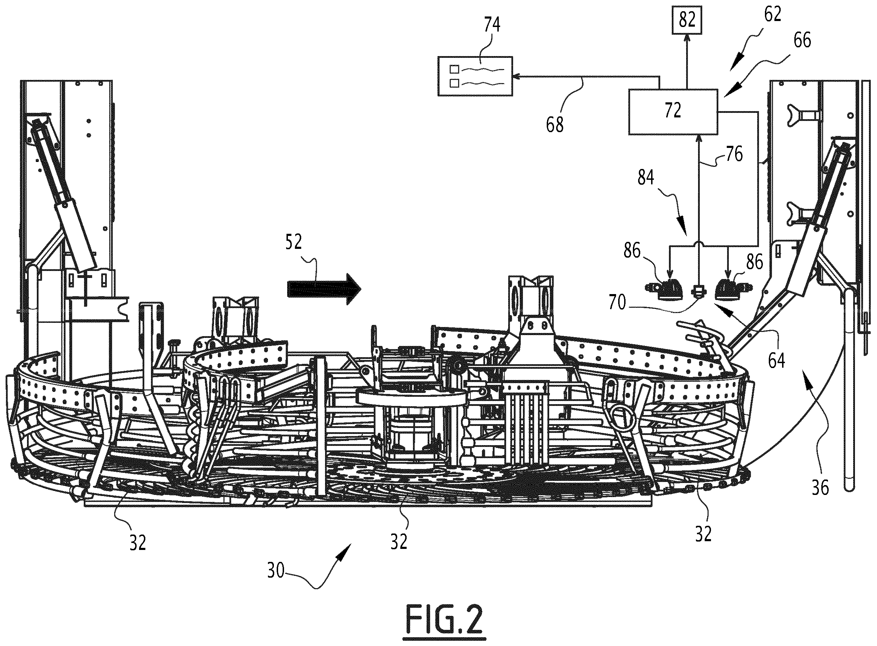

Fig. 2: in Seitenansicht eine Transportstrecke des Fahrzeugs der Figur 1 sowie eine schematische Ansicht verschiedener Komponenten der Bestimmungsvorrichtung der Erfindung; und

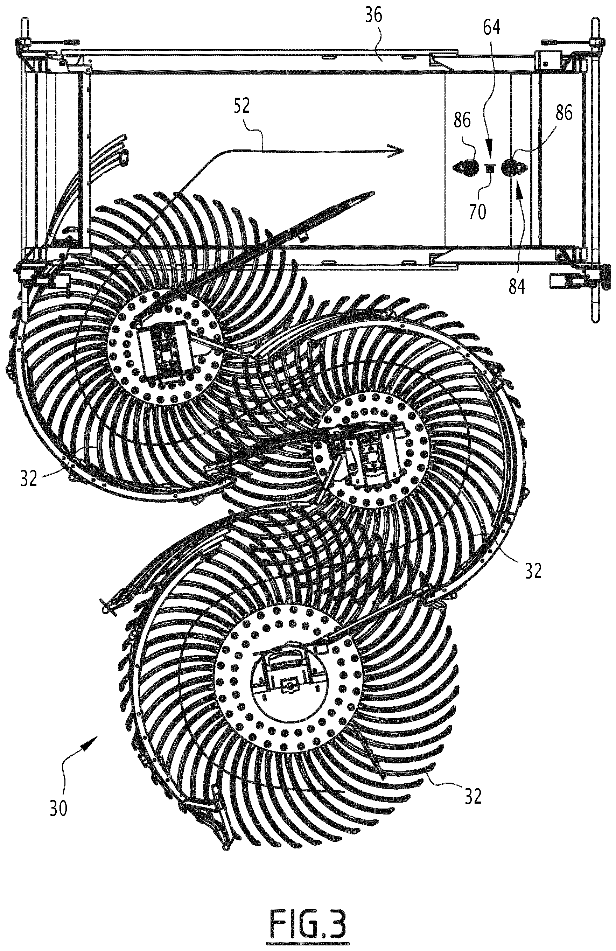

Fig. 3: eine Aufsicht der Transportstrecke der Figur 2.

Das in den Figuren allgemein mit 2 bezeichnete Ernte- oder Rodefahrzeug dient zum Ernten oder Roden von Zuckerrüben 4 und beinhaltet einen Rahmen 6, an welchem Fahrzeugachsen mit entsprechenden Rädern 8 vorgesehen sind. Zumindest die Räder 8 sind durch einen Antrieb 12 des Fahrzeugs 2 angetrieben. Anstelle von Zuckerrüben 4 kann das Ernte- oder Rodefahrzeug auch dazu ausgebildet sein andere entsprechende Knollen-, Rüben- oder Wurzelfrüchte z.B. Kartoffeln zu ernten.

An der Vorderseite des Rahmens 6 ist eine heb- und senkbare Rodeeinheit 16 vorgesehen. Die Rodeeinheit weist eine Köpfeinheit 18 auf, durch die die Zuckerrüben geköpft werden können. Über Stellelemente, die bei der dargestellten Ausführungsform Hydraulikzylinder 20 sind, kann die Rodeeinheit 16 in bekannter Weise angehoben und für das Roden bzw. Ernten abgesenkt werden. An der Vorderseite des Rahmens 6 ist ein Fahrerhaus 24 vorgesehen. Zur Rückseite des Rahmens 6 hin der an seiner Oberseite folgt eine Lagereinheit 26, z. B. in Form eines offenen Bunkers, zur Aufnahme der geernteten Wurzelfrüchte, hier Zuckerrüben 4. Die Lagereinheit 26 kann alternativ auch an einer anderen Stelle des Ernte- oder Rodefahrzeugs 2 angeordnet sein.

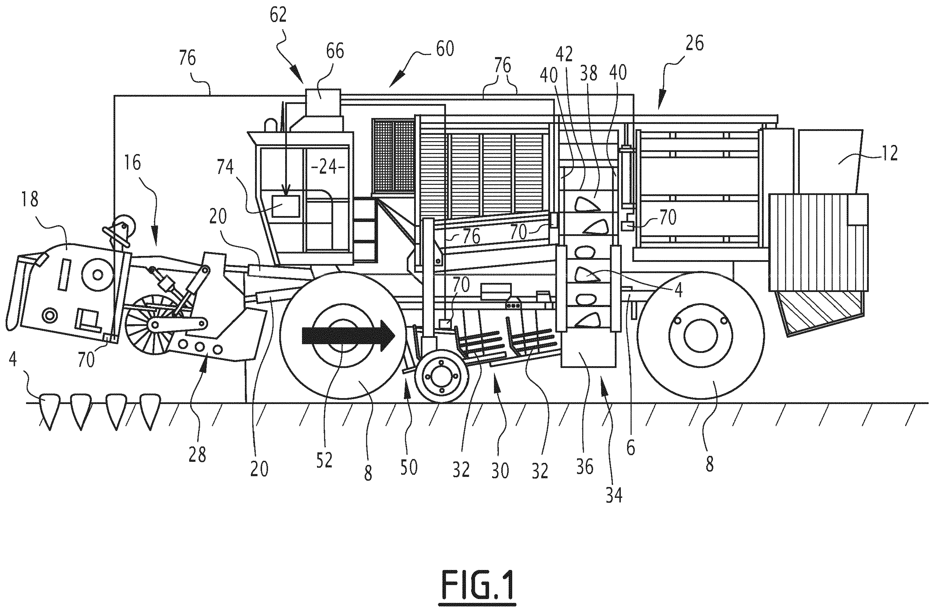

Die Zuckerrüben 4 weisen eine Haut und Fruchtfleisch auf. Die in Figur 1 dargestellten Zuckerrüben 4 sind bereits geköpft, so dass sie eine freie Schnittfläche am Kopf aufweisen, an der das Fruchtfleisch freiliegt. Der übrige Körper der Zuckerrüben 4 ist mit Haut bedeckt.

Die Rodeeinheit 16 kann weiterhin eine nicht dargestellte Schleglereinheit aufweisen, die dazu ausgebildet ist, die Blätter vom Rübenkörper abzuschlegeln, bevor die Zuckerrüben geköpft werden.

Das Roden der Zuckerrüben 4 erfolgt mit der Rodeeinheit 16 vorzugsweise gleichzeitig in mehreren Reihen. Die geernteten Zuckerrüben 4 gelangen dabei von der Rodeeinheit 16 über eine erste Transporteinheit 28, sowie über eine anschließende Reinigungseinheit 30, die bei der dargestellten Ausführungsform von mehreren aufeinander folgenden und jeweils rotierend angetriebenen Siebsternen 32 gebildet ist, an eine zweite Transporteinheit 34. Die erste Transporteinheit 28 umfasst vorzugsweise Transportwalzen. Die zweite Transporteinheit 34 umfasst ein Zuführband 36. Das Zuführband 36 fördert die geernteten Zuckerrüben 4 zur Aufgabeposition einer dritten Transporteinheit, im vorliegenden Fall einen Aufwärtsförderer 38.

Der Aufwärtsförderer 38 umfasst mindestens einen endlos umlaufenden antreibbaren oder angetriebenen Gurt 40. An dem Gurt 40 sind in gleichmäßigen Abständen Mitnehmer 42 vorgesehen, die über die Seite des Gurtes 40 wegstehen und Auflagen für die Zuckerrüben 4 bilden. Der Aufwärtsförderer 38 kann alternativ auch anders ausgebildet sein. Der Aufwärtsförderer 38 ist dazu ausgebildet, die Zuckerrüben 4 z.B. in die Lagereinheit 26 zu befördern.

Das Ernte- oder Rodefahrzeug 2 umfasst eine Fruchtflussvorrichtung 50, die die Rodeeinheit 16 zum Roden der Früchte, eine oder mehrere Transporteinheiten zum Transportieren der gerodeten Früchte, zum Beispiel die Transporteinheiten 28 und 34, die Reinigungseinheit 30 zum Reinigen der gerodeten Früchte, den Aufwärtsförderer und/oder die Lagereinheit 26 der gerodeten Früchte umfasst.

Die Fruchtflussvorrichtung 50 ist dazu ausgebildet, einen Strom 52 geernteter Früchte 4 zu behandeln.

Je nach Konfiguration des Ernte- oder Rodefahrzeugs 2, können einzelne der o.g. Einheiten der Fruchtflussvorrichtung 50 weggelassen werden, untereinander in der Reihenfolge verändert werden, ausgetauscht werden oder durch andere Einheiten ersetzt werden. Die Fruchtflussvorrichtung 50 kann die Rodeeinheit 16 zum Roden der Früchte, die Transporteinheit 36 zum Transportieren der gerodeten Früchte, die Reinigungseinheit 30 zum Reinigen der gerodeten Früchte, und/oder den Aufwärtsförderer 38 zum Aufwärtsfördern der Wurzelfrüchte, und/oder die Lagereinheit 26 der gerodeten Früchte in jeder beliebigen technisch möglichen Kombination umfassen. Einzelne oder mehrere dieser Einheiten können auch gegebenenfalls wegfallen oder durch andere bzw. ähnliche Vorrichtungen ersetzt werden.

Das Ernte- oder Rodefahrzeug 2 umfasst ebenfalls einen Bordrechner 60, der dazu ausgebildet ist, die einzelnen Einheiten des Fahrzeugs zu steuern. Hierzu umfasst das Fahrzeug 2 die entsprechenden Sensoren, Ein/Ausgabemittel wie Bildschirme und Tastaturen, sowie Aktoren, die mit dem Bordrechner verbunden sind.

Das Ernte- oder Rodefahrzeug 2 umfasst weiterhin eine Bestimmungsvorrichtung 62 zur Bestimmung eines Datums des Stromes 52 der geernteten Früchte.

Die Bestimmungsvorrichtung 62 umfasst
- eine Sensoreinrichtung 64 zur Erfassung eines Rohdatums des Stroms 52,
- eine mit der Sensoreinrichtung 64 verbundene Bestimmungseinrichtung 66 zur Bestimmung eines Inhaltsstoffgehalts, vorzugsweise des Zuckergehalts, der Wurzelfrüchte des Stromes basierend auf dem Rohdatum.

Alternativ kann der zu bestimmende Gehalt eines Inhaltsstoffs auch der Gehalt eines anderen qualitätsrelevanten chemischen Inhaltsstoffes, z.B. der Stärkegehalt, sein.

Die Bestimmungsvorrichtung 62 ist dazu ausgebildet, z.B. über eine Signalleitung 68, ein Signal auszugeben, das dem eines Inhaltsstoffgehalt bzw. Zuckergehalt der Wurzelfrüchte entspricht. Das Signal kann z.B. auf einer Anzeigeeinheit 74 angezeigt werden.

Die Sensoreinrichtung 64 umfasst eine Sensoreinheit 70, die einen Nahinfrarotspektroskopiesensor (NIRS-Sensor - Nearinfrared spectroscopy) und/oder ein hyperspektrales Spektroradiometrisensorsystem umfasst.

Der Nahinfrarotspektroskopiesensor weist z.B. einen Arbeitsbereich im Bereich der Wellenlängen von 760nm oder 780nm - 2500nm oder 3000nm auf.

Das Rohdatum ist z.B. das von dem Sensor oder Sensorsystem ausgegebene Signal.

Im vorliegenden Falle generiert der oder die Sensor(en) eine Folge von Signalen, die den vom Fruchtfleisch, der von der Rodeeinheit 16 zur Lagereinheit 26 geförderten Zuckerrüben, reflektierten Strahlen z.B. im Nahinfrarot entsprechen. Die Bestimmungseinrichtung 66 bzw. die Sensoreinrichtung 64 ist vorteilhafterweise dazu ausgebildet, das Fruchtfleisch zu detektieren bzw zwischen Fruchtfleisch und anderen Objekten zu unterscheiden. Hierzu weist die Sensoreinheit 70 vorteilhafterweise einen Nahinfrarotspektroskopiesensor und ein hyperspektrales Spektroradiometrisensorsystem auf. Die Unterscheidung zwischen Fruchtfleisch und anderen Objekten trifft die Bestimmungseinrichtung 66 z.B. durch entsprechenden Vergleich der Signale des Nahinfrarotspektroskopiesensors und des hyperspektralen Spektroradiometrisensorsystems.

Erfindungsgemäß ist die Sensoreinrichtung 64 bzw. die Sensoreinheit 70 auf dem Ernte- oder Rodefahrzeug 2 so angeordnet, dass sie die auf dem Aufwärtsförderer 38 beförderten Wurzelfrüchte bzw. Zuckerrüben 4 erfasst. Dies ist vorteilhaft, da sich in diesem Bereich die Rüben kaum zueinander und kaum relativ zum Gurt 40 bewegen.

Vorteilhafterweise ist die Sensoreinrichtung 64 bzw. die Sensoreinheit 70 auf dem Ernte- oder Rodefahrzeug so angeordnet, dass sie die Wurzelfrüchte zusätzlich zur Erfassung auf dem Aufwärtsförderer auch auf der Rodeeinheit 16 und/oder auf der Transporteinheit 34 und/oder auf der Reinigungseinheit 30 und/oder in der Lagereinheit 26 und/oder auf der Entladeeinheit erfasst.

Im vorliegenden Falle ist die Sensoreinrichtung 64 bzw. die Sensoreinheit 70 so angeordnet, dass sie den Fruchtfluss auf dem Aufwärtsförderer 38 erfasst. Die Sensoreinrichtung 64 bzw. die Sensoreinheit 70 ist weiterhin so angeordnet, dass sie den Fruchtfluss auf der zweiten Transporteinheit 34 (bzw. dem Zuführband 36), die zwischen der Reinigungseinheit 30 (bzw. den Siebsternen 32) und der dritten Transporteinheit (bzw. dem Aufwärtsförderer 38), angeordnet ist, erfasst. Schematisch ist auf Figur 1 erkennbar, dass die Sensoreinrichtung 64 bzw. die Sensoreinheit 70 weiterhin so angeordnet ist, dass sie die im Boden befindlichen Zuckerrüben 4 erfasst. Hierzu ist Sensoreinheit 70 auf dem Rodeaggregat 16 so angeordnet, dass die Zuckerrüben vor dem Roden erfasst werden. Dies erlaubt eine besonders genaue Erfassung der durch Köpfung freiliegenden Fruchtfleischfläche. Die vorstehend genannten Anordnungen der Sensoreinrichtung 64 bzw. Sensoreinheit(en) 70 können jeweils alternativ oder in jeder beliebigen Kombination vorgesehen werden.

Die Bestimmungseinrichtung 66 umfasst eine Rechnereinheit 72 zur Bestimmung des Inhaltsstoffgehalts, vorzugsweise des Zuckergehalts. Die Bestimmungseinrichtung 66, bzw die Rechnereinheit 72, ist dazu ausgebildet, den Inhaltsstoffgehalt, vorzugsweise den Zuckergehalt, in Abhängigkeit des detektierten Fruchtfleisches zu bestimmen.

Gemäß dem dargestellten Ausführungsbeispiel ist die Rechnereinheit 72 von der Sensoreinheit 70 entfernt und durch Kommunikationsmittel 76 mit der Sensoreinheit verbunden. Beide Einheiten 70, 72 sind jedoch auf dem Ernte- und Rodefahrzeug 2 angeordnet.

Die Rechnereinheit 72 kann ein eigener Bordrechner des Fahrzeugs sein, oder ein Teil des Bordrechners 60.

Die Kommunikationsmittel 76 umfassen z.B. drahtgebundene Kommunikationsmittel, wie Kabel oder Datenbusse. Alternativ umfassen die Kommunikationsmittel 76 drahtlose Kommunikationsmittel wie z.B. Bluetooth, oder WiFi-Kommunikationsstrecken.

Alternativ und in nicht dargestellter Weise ist die Rechnereinheit 72 mit der Sensoreinheit 70 mechanisch verbunden und bildet mit dieser ein gemeinsam handhabbares Modul.

Alternativ umfassen die Kommunikationsmittel 76 drahtlose Kommunikationsmittel und die Rechnereinheit 72 oder ein Teil der Rechnereinheit ist nicht auf dem Fahrzeug angebracht und ist nicht mechanisch mit der Sensoreinheit 70 verbunden. In diesem Falle ist die Rechnereinheit 72 ein Rechner, der mit dem Internet verbunden ist und die drahtlosen Kommunikationsmittel erlauben der Rechnereinheit die Signale der Sensoreinheit 70 zu empfangen und verteilt zu verarbeiten (Cloud Rechner/Internet).

Die Bestimmungsvorrichtung 62 umfasst weiterhin mindestens ein Bestimmungshilfsmittel 84, das die Erfassungsgüte der Sensoreinheit 70 erhöht oder unterstützt. Das Bestimmungshilfsmittel 84 umfasst im vorliegenden Fall ein zusätzliches Beleuchtungsmittel 86, das das Bildfeld der Sensoreinheit 70, mit einem der Sensoreinheit entsprechenden Spektrum, wie IR-Nahfeld, ausleuchtet.

Die Fruchtflussvorrichtung kann eine Bypassvorrichtung, bzw. einen Gutflussbypass umfassen, die dazu ausgebildet ist, aus der Gesamtheit der auf der Fruchtflussvorrichtung 50 entlanggeführten Wurzelfrüchte, den Strom geernteter Wurzelfrüchte und einen zusätzlichen Strom geernteter Wurzelfrüchte zu generieren. Die Sensoreinrichtung 64 kann hierbei zur Erfassung eines Rohdatums ausschließlich des Stroms ausgebildet sein, aber nicht zur Erfassung eines Rohdatums des zusätzlichen Stroms. Die Bypassvorrichtung kann ein angetriebenes Förderelement, wie z.B. ein Förderband umfassen, oder durch eine manuelle Entnahmevorrichtung, wie z.B. eine verschließbare Entnahmeöffnung.

Die Bypassvorrichtung bzw. der Gutflussbypass ist z.B. eine Vorrichtung auf der ein erster Teil der Wurzelfrüchte entlanggeführt wird, so dass dieser Teil von der Sensoreinheit 70 erfasst wird und ein zweiter Teil der Wurzelfrüchte an der Sensoreinheit vorbeigeführt wird und nicht erfasst wird. Damit kann die Erfassungsgüte zumindest des erfassten Stromes verbessert werden. Insbesondere kann dadurch der Rechenaufwand zur Bestimmung des Inhaltsstoffgehalts, vorzugsweise des Zuckergehalts, gering gehalten werden und die Erfassungsbedingungen für die Sensoren verbessert werden (z.B. guter Kontrast).

Weiterhin kann die Fruchtflussvorrichtung eine Behandlungsvorrichtung umfassen, die dazu ausgebildet ist, den Strom bzw. die Wurzelfrüchte vor der Erfassung durch die Sensoreinrichtung 64, d.h. stromaufwärts vor der Sensoreinrichtung 64, zu behandeln und die freie Oberfläche an Fruchtfleisch zu vergrößern. Eine solche Behandlungsvorrichtung kann z.B. eine Schälvorrichtung zum teilweisen oder ganzen Schälen der Wurzelfrüchte und/oder eine Zerkleinerungsvorrichtung zum Zerkleinern der Wurzelfrüchte umfassen. Die Zerkleinerungsvorrichtung kann dazu ausgebildet sein die Wurzelfrüchte zu Wurzelfruchtmus zu verarbeiten.

Vorteilhafterweise, umfasst die Fruchtflussvorrichtung jedoch keine Behandlungsvorrichtung die dazu ausgebildet ist die freie Oberfläche an Fruchtfleisch zu vergrößern.

Die Behandlungsvorrichtung kann wahlweise an der Rodeeinheit 16, und/oder an der Transporteinheit 34, und/oder an der Reinigungseinheit 30, und/oder am Aufwärtsförderer 38, und/oder der Lagereinheit 26 zum Bunkern der Wurzelfrüchte, und oder der Entladeeinheit angebracht sein.

Die Sensoreinheit 70 kann alternativ oder zusätzlich zu den NIR-Sensoren bzw. hyperspektralen Sensoren, einen taktilen Sensor oder einen Ultraschallsensor aufweisen. In letzterem Falle können die Bestimmungshilfsmittel 84 einen Ultraschallgeber umfassen, der Ultraschallwellen in die Früchte einleitet. In diesen Fällen bestimmt die Bestimmungseinrichtung 66 aus den Rohdaten des taktilen Sensors bzw. des Ultraschallsensors den Inhaltsstoffgehalt bzw. Zuckergehalt.

Weiterhin alternativ oder zusätzlich kann die Sensoreinheit 70 einen Dampfsensor aufweisen, der aus der Verdampfung von Teilen der Wurzelfrüchte gewonnenen Dampf analysiert und daraus das Rohdatum bildet. Hierbei kann das Bestimmungshilfsmittel 84 einen Verdampfer von Teilen der Wurzelfrüchte umfassen.

Weiterhin alternativ oder zusätzlich weist das Ernte- oder Rodefahrzeug 2 eine nicht dargestellte Messsonde auf, die die Sensoreinheit 70 umfasst. Die Messsonde ist dabei in das Innere der Wurzelfrüchte bzw. Zuckerrüben einbringbar und dazu ausgebildet, das Rohsignal basierend auf dem Fruchtfleisch im Inneren der Wurzelfrüchte bzw. Zuckerrüben zu generieren. Die Messsonde ist dabei z.B. eine Stecksonde.

Alternativ oder zusätzlich weist das Ernte- oder Rodefahrzeug 2 eine nicht dargestellte Probensonde auf, die dazu ausgebildet ist eine Probe des Fruchtfleischs aus dem Inneren der Wurzelfrüchte bzw. Zuckerrüben zu extrahieren. Die Sensoreinheit 70 ist dann dazu ausgebildet das Rohsignal basierend aus der extrahierten Probe zu generieren. Hierbei ist die Probensonde z.B. Teil der Behandlungsvorrichtung.

Die Sensoreinheit 70 ist vorteilhafterweise dazu ausgebildet und auf dem Erntefahrzeug so angeordnet, dass bei der Erfassung der Wurzelfrüchte bzw. Zuckerrüben, die Wurzelfrüchte bzw. Zuckerrüben nur eine freie Schnittfläche am Kopf aufweisen, an der das Fruchtfleisch freiliegt, der übrige Körper der Wurzelfrüchte bzw. Zuckerrüben 4 jedoch mit Haut bedeckt ist. Hierdurch wird die nutzbare Erntemenge erhöht, da die Wurzelfrüchte bzw. Zuckerrüben 4 zerstörungsfrei detektiert werden. Vorteilhafterweise weisen die Wurzelfrüchte bzw. Zuckerrüben 4 bei der Erfassung durch die Sensoreinheit 70 eine größte Abmessung auf, die grösser als 10cm ist.

Vorteilhafterweise ist die Sensoreinheit 70 stromabwärts einer Reinigungseinheit der Wurzelfrüchte bzw. Zuckerrüben angeordnet, z.B. stromabwärts der Reinigungseinheit 30 oder zumindest an dem am weitesten stromabwärts gelegenen der Siebsterne 32. Hierdurch wird die Erfassungsqualität erhöht.

Das Erntefahrzeug kann ein Rübenrodefahrzeug, wie im vorangehenden Beispiel, oder ein nicht dargestellter Rübenreinigungslader sein. Im Falle eines Rübenreinigungsladers umfasst der Reinigungslader eine Aufnahmevorrichtung, z.B. einen Aufnahmetisch, und eine Entladeeinheit zum Entladen und zur Übergabe der Wurzelfrüchte an ein Transportfahrzeug. Die Entladeeinheit kann z.B. ein Überlader sein. In diesem Falle ist die Sensoreinrichtung vorteilhafterweise auf der Entladeeinheit angeordnet, so dass sie die Wurzelfrüchte auf der Entladeeinheit erfasst.

Allgemein ist das Erntefahrzeug z.B. dazu ausgebildet, während einer Aufnahmefahrt Wurzelfrüchte, z.B. Zuckerrüben, aufzunehmen und die Bestimmungseinrichtung 66 ist dazu ausgebildet, während der Aufnahmefahrt den Inhaltsstoffgehalt, vorzugsweise den Zuckergehalt, der aufgenommenen Wurzelfrüchte zu bestimmen.

Das oben offenbarte Erntefahrzeug wird vorteilhafterweise mit folgenden Schritten verwendet:
- Das Rohdatum des Stroms 52 wird durch die Sensoreinrichtung 64 erfasst.
- Der Inhaltsstoffgehalt, vorzugsweise der Zuckergehalt, der Wurzelfrüchte wird durch die Bestimmungseinrichtung basierend auf dem Rohdatum bestimmt.

Vorteilhafterweise werden die obigen Schritte während einer Aufnahmefahrt, bzw. während des Rodens der Wurzelfrüchte durchgeführt. Hierzu wird aus den gerodeten Wurzelfrüchten der Strom 52 gebildet.

## Patentansprüche

1. Erntefahrzeug (2) zum Ernten von Wurzelfrüchten, beispielsweise Zuckerrüben, mit einer Fruchtflussvorrichtung (50) zur Behandlung eines Stroms (52) geernteter Wurzelfrüchte,
wobei das Erntefahrzeug
- eine Sensoreinrichtung (64) zur Erfassung eines Rohdatums des Stroms, und
- eine mit der Sensoreinrichtung verbundene Bestimmungseinrichtung (66) zur Bestimmung eines Inhaltsstoffgehalts, vorzugsweise des Zuckergehalts, der Wurzelfrüchte des Stromes basierend auf dem Rohdatum, umfasst, **dadurch gekennzeichnet, dass** die Fruchtflussvorrichtung einen Aufwärtsförderer (38) zum Aufwärtsfördern der Wurzelfrüchte umfasst und wobei die Sensoreinrichtung (64) auf dem Erntefahrzeug so angeordnet ist, dass sie die Wurzelfrüchte auf dem Aufwärtsförderer (38) erfasst.

2. Erntefahrzeug nach Anspruch 1, wobei die Sensoreinrichtung (64) einen Nahinfrarotspektroskopiesensor und/oder ein hyperspektrales Spektroradiometrisensorsystem umfasst.

3. Erntefahrzeug nach einem der Ansprüche 1 oder 2, wobei die Fruchtflussvorrichtung
eine Rodeeinheit (16) zum Roden der Wurzelfrüchte, und/oder eine Transporteinheit (34) zum Transportieren der Wurzelfrüchte, und/oder eine Reinigungseinheit (30) zum Reinigen der Wurzelfrüchte, und/oder eine Lagereinheit (26) zum Bunkern der Wurzelfrüchte, und/oder eine Entladeeinheit zum Entladen und zur Übergabe der Wurzelfrüchte an ein Transportfahrzeug,
umfasst,
und wobei die Sensoreinrichtung (64) weiterhin derart ausgebildet und auf dem Erntefahrzeug so angeordnet ist, dass sie die Wurzelfrüchte auf der Rodeeinheit (16) und/oder auf der Transporteinheit (34) und/oder auf der Reinigungseinheit (30), und/oder in der Lagereinheit (26) und/oder auf der Entladeeinheit erfasst.

4. Erntefahrzeug nach einem der Ansprüche 1 bis 3, wobei die Fruchtflussvorrichtung eine Bypassvorrichtung umfasst die dazu ausgebildet ist, den Strom (52) und einen zusätzlichen Strom geernteter Wurzelfrüchte zu generieren und die Sensoreinrichtung (64) nur zur Erfassung eines Rohdatums des Stroms ausgebildet ist, aber nicht zur Erfassung eines Rohdatums des zusätzlichen Stroms.

5. Erntefahrzeug nach einem der Ansprüche 1 bis 4, wobei die Wurzelfrüchte Fruchtfleisch aufweisen, wobei die Sensoreinrichtung (64) dazu ausgebildet ist, das Fruchtfleisch zu detektieren und wobei die Bestimmungseinrichtung (66) dazu ausgebildet ist, den Inhaltsstoffgehalt, vorzugsweise den Zuckergehalt, in Abhängigkeit des detektierten Fruchtfleisches zu bestimmen.

6. Erntefahrzeug nach einem der Ansprüche 1 bis 5, wobei die Fruchtflussvorrichtung eine Behandlungsvorrichtung umfasst, die dazu ausgebildet ist, den Strom (52) vor der Erfassung durch die Sensoreinrichtung (64) zu behandeln und die freie Oberfläche an Fruchtfleisch zu vergrößern, insbesondere eine Schälvorrichtung oder eine Zerkleinerungsvorrichtung der geernteten Wurzelfrüchte.

7. Erntefahrzeug nach einem der Ansprüche 1 bis 6, wobei die Bestimmungseinrichtung eine Rechnereinheit (72) zur Bestimmung des Inhaltsstoffgehalts, vorzugsweise des Zuckergehalts, umfasst.

8. Erntefahrzeug nach einem der Ansprüche 1 bis 7, wobei das Erntefahrzeug entweder ein Rübenrodefahrzeug oder ein Rübenreinigungslader ist.

9. Erntefahrzeug nach einem der Ansprüche 1 bis 8, wobei das Erntefahrzeug (2) dazu ausgebildet ist, während einer Aufnahmefahrt Wurzelfrüchte aufzunehmen und wobei die Bestimmungseinrichtung (66) dazu ausgebildet ist, während der Aufnahmefahrt den Inhaltsstoffgehalt, vorzugsweise den Zuckergehalt, der aufgenommenen Wurzelfrüchte zu bestimmen.

10. Verwendung eines Erntefahrzeuges nach einem der vorhergehenden Ansprüche, umfassend die folgenden Schritte:
- Erfassung des Rohdatums des Stroms durch die Sensoreinrichtung (64),
- Bestimmen des Inhaltsstoffgehalts, vorzugsweise des Zuckergehalts, der Wurzelfrüchte durch die Bestimmungseinrichtung (66) basierend auf dem Rohdatum.

## Claims

1. Harvesting vehicle (2) for harvesting root crops, for example sugar beet, with a crop flow device (50) for handling a flow (52) of harvested root crops,
wherein the harvesting vehicle comprises
- a sensor device (64) for detecting raw data of the flow, and
- a determining device (66) connected to the sensor device for determining a constituent content, preferably the sugar content, of the root crops of the flow based on the raw data, **characterised in that** the crop flow device comprises an upward conveyor (38) for conveying the root crops upwards, and wherein the sensor device (64) is arranged on the harvesting vehicle such that it detects the root crops on the upward conveyor (38).

2. Harvesting vehicle according to claim 1, wherein the sensor device (64) comprises a near-infrared spectroscopy sensor and/or a hyperspectral spectroradiometer sensor system.

3. Harvesting vehicle according to one of claims 1 or 2, wherein the crop flow device comprises
a lifting unit (16) for lifting the root crops, and/or
a transport unit (34) for transporting the root crops, and/or
a cleaning unit (30) for cleaning the root crops, and/or
a storage unit (26) for storing root crops, and/or
an unloading unit for unloading and transferring the root crops to a transport vehicle,
and wherein the sensor device (64) is further designed and arranged on the harvesting vehicle in such a way that it detects the root crops on the lifting unit (16) and/or on the transport unit (34) and/or on the cleaning unit (30), and/or in the storage unit (26) and/or on the unloading unit.

4. Harvesting vehicle according to one of claims 1 to 3, wherein the crop flow device comprises a bypass device designed to generate the flow (52) and an additional flow of harvested root crops, and the sensor device (64) is designed only to detect raw data of the flow, but not to detect raw data of the additional flow.

5. Harvesting vehicle according to one of claims 1 to 4, wherein the root crops have pulp, wherein the sensor device (64) is designed to detect the pulp, and wherein the determining device (66) is designed to determine the content of constituents, preferably the sugar content, depending on the detected pulp.

6. Harvesting vehicle according to one of claims 1 to 5, wherein the crop flow device comprises a treatment device which is designed to handle the flow (52) before it is detected by the sensor device (64) and to increase the free surface area of the crop pulp, in particular a peeling device or a shredding device for the harvested root crops.

7. Harvesting vehicle according to one of claims 1 to 6, wherein the determining device comprises a computer unit (72) for determining the content of constituents, preferably the sugar content.

8. A harvesting vehicle according to one of claims 1 to 7, wherein the harvesting vehicle is either a beet harvester or a beet cleaner loader.

9. Harvesting vehicle according to one of claims 1 to 8, wherein the harvesting vehicle (2) is designed to pick up root crops during a pick-up run, and wherein the determining device (66) is designed to determine the content of constituents, preferably the sugar content, of the root crops picked up during the pick-up run.

10. Use of a harvesting vehicle according to any one of the preceding claims, comprising the following steps:
- Recording of the raw data of the flow by the sensor device (64),
- Determining the content of constituents, preferably the sugar content, of root crops by the determining device (66) based on the raw data.

## Revendications

1. Véhicule de récolte (2) pour récolter des racines comestibles, par exemple des betteraves à sucre, avec un dispositif d'écoulement de racines (50) pour traiter un flux (52) de racines comestibles récoltées,
dans lequel le véhicule de récolte comprend
- un équipement de détection (64) pour acquérir une donnée brute du flux, et
- un équipement de détermination (66) connecté à l'équipement de détection pour déterminer une teneur en constituants, de préférence la teneur en sucre, des racines comestibles du flux sur la base de la donnée brute, **caractérisé en ce que** le dispositif d'écoulement de racines comprend un transporteur ascendant (38) pour transporter les racines comestibles vers le haut et dans lequel l'équipement de détection (64) est disposé sur le véhicule de récolte de sorte qu'il capte les racines comestibles sur le transporteur ascendant (38).

2. Véhicule de récolte selon la revendication 1, dans lequel l'équipement de détection (64) comprend un capteur de spectroscopie dans le proche infrarouge et/ou un système de détection par spectroradiométrie hyperspectrale.

3. Véhicule de récolte selon l'une quelconque des revendications 1 ou 2, dans lequel le dispositif d'écoulement de racines comprend
une unité d'arrachage (16) pour arracher les racines comestibles, et/ou
une unité de transport (34) pour transporter les racines comestibles, et/ou
une unité de nettoyage (30) pour nettoyer les racines comestibles, et/ou
une unité de stockage (26) pour la conservation des racines comestibles, et/ou
une unité de déchargement pour décharger et pour transférer les racines comestibles vers un véhicule de transport,
et dans lequel l'équipement de détection (64) est en outre réalisé et disposé sur le véhicule de récolte de telle sorte qu'il capte les racines comestibles sur l'unité d'arrachage (16) et/ou sur l'unité de transport (34) et/ou sur l'unité de nettoyage (30), et/ou dans l'unité de stockage (26) et/ou sur l'unité de déchargement.

4. Véhicule de récolte selon l'une quelconque des revendications 1 à 3, dans lequel le dispositif d'écoulement de racines comprend un dispositif de dérivation qui est réalisé pour générer le flux (52) et un flux supplémentaire de racines comestibles récoltées et l'équipement de détection (64) est réalisé uniquement pour acquérir une donnée brute du flux, mais pas pour acquérir une donnée brute du flux supplémentaire.

5. Véhicule de récolte selon l'une quelconque des revendications 1 à 4, dans lequel les racines comestibles présentent de la pulpe, dans lequel l'équipement de détection (64) est réalisé pour détecter la pulpe et dans lequel l'équipement de détermination (66) est réalisé pour déterminer la teneur en constituants, de préférence la teneur en sucre, en fonction de la pulpe détectée.

6. Véhicule de récolte selon l'une quelconque des revendications 1 à 5, dans lequel le dispositif d'écoulement de racines comprend un dispositif de traitement qui est réalisé pour traiter le flux (52) avant son acquisition par l'équipement de détection (64) et pour augmenter la surface libre de pulpe, notamment un dispositif d'épluchage ou un dispositif de broyage des racines récoltées.

7. Véhicule de récolte selon l'une quelconque des revendications 1 à 6, dans lequel le dispositif de détermination comprend une unité de calcul (72) pour déterminer la teneur en constituants, de préférence la teneur en sucre.

8. Véhicule de récolte selon l'une quelconque des revendications 1 à 7, dans lequel le véhicule de récolte est soit un véhicule d'arrachage de betteraves soit un chargeur de nettoyage de betteraves.

9. Véhicule de récolte selon l'une quelconque des revendications 1 à 8, dans lequel le véhicule de récolte (2) est réalisé pour ramasser des racines comestibles pendant un trajet de ramassage et dans lequel le dispositif de détermination (66) est réalisé pour déterminer la teneur en constituants, de préférence la teneur en sucre, des racines comestibles ramassées pendant le trajet de ramassage.

10. Utilisation d'un véhicule de récolte selon l'une quelconque des revendications précédentes, comprenant les étapes suivantes :
- l'acquisition de la donnée brute du flux par l'équipement de détection (64),
- la détermination de la teneur en constituants, de préférence de la teneur en sucre, des racines comestibles par l'équipement de détermination (66) sur la base de la donnée brute.
